# EUROPÄISCHE PATENTSCHRIFT

(11) **EP 0 325 707 B1**
(45) Veröffentlichungstag und Bekanntmachung des Hinweises auf die Patenterteilung: **26.05.1993**
(21) Anmeldenummer: 88118233.1
(22) Anmeldetag: 02.11.1988
(51) Int. Cl.: B60J 5/10

(54) **Kraftfahrzeug**
Motor vehicle
Véhicule automobile

(30) Priorität: 26.01.1988 DE 8800870 U
(43) Veröffentlichungstag der Anmeldung: 02.08.1989
(73) Patentinhaber: Wilhelm Karmann GmbH, D-49084 Osnabrück (DE)
(72) Erfinder: Licher, Siegfried, D-4504 Georgsmarienhütte (DE)
(74) Vertreter: Busse & Busse Patentanwälte

(56) Entgegenhaltungen:
- WO-A-87/07672
- DE-A- 2 937 166

## Beschreibung

Die Erfindung bezieht sich auf ein Kraftfahrzeug mit einer an einer Fahrzeugkarosserie über Scharniere schwenkbeweglich abstützbaren Tür oder Klappe, insbesondere bezieht sie sich auf einen Personenkraftwagen mit einer im Dachbereich an der Fahrzeugkarosserie anlenkbaren Rückwandklappe, wobei in das Dach der Fahrzeugkarosserie jeweils längs eines Außenseitenbereichs eine durch ein Leistenprofil abdeckbare Regenrinne eingeformt ist.

Bei Kraftfahrzeugen herkömmlicher Bauart mit einer in das Karosseriedach eingeformten Regenrinne sind die Scharniere zur schwenkbeweglichen Halterung von Rückwandklappen üblicherweise unterhalb des rückwärtigen Endes des Daches an der Fahrzeugkarosserie einenends befestigt oder an der Außenseite des Daches gehaltert. Ersteres bedingt eine Verminderung der Kopffreiheit innerhalb des Fahrgastraumes. Durch die Anordnung von Scharnierteilen auf dem Dach werden die aerodynamischen Eigenschaften der Fahrzeugkarosserie in nachteiliger Weise beeinflußt. Darüber hinaus ist dadurch das optische Erscheidungsbild der Karosserie bzw. des Fahrzeuges beeinflußt.

Aus der DE-A-29 37 166 ist ein Kraftfahrzeug mit einer schwenkbeweglich über Scharnierteile gehalterten Rückwandklappe bekannt. Bei diesen Kraftfahrzeugen ist in ähnlicher Weise wie zuvor beschrieben am rückwärtigen Ende des Dachbereiches eine Mulde ausgebildet, in die ein Scharnierteil gegenüber der Außenhaut des Daches versenkt angeordnet ist. Die an diesem Scharnierteil gehalterte Heckklappe taucht mit ihrem oberen Ende beim Hochklappen in die Mulde ein. Damit ist die Kopffreiheit bzw. der Raum unterhalb des rückwärtigen Endes des Daches beeinträchtigt.

Es ist Aufgabe der vorliegenden Erfindung, ein Kraftfahrzeug der eingangs genannten Art zu schaffen, bei dem ohne wesentliche Beeinträchtigung der Kopffreiheit innerhalb des Fahrgastraumes und ohne nachteilige Beeinträchtigung aerodynamischer Eigenschaften des Fahrzeuges Türen oder Klappen sicher schwenkbeweglich an der Karosserie abzustützen sind und darüber hinaus auch eine in das Dach eingeformte Regenrinne in baulich einfacher Weise vorzusehen ist.

Zur Lösung dieser Aufgabe sieht die Erfindung ein Kraftfahrzeug der im Anspruch 1 angegebenen Art vor. Hinsichtlich wesentlicher weiterer Ausgestaltungen der Erfindung wird auf die Ansprüche 2 bis 5 verwiesen.

Durch die Anordnung von Scharnierteilen in im Dachbereich an der Außenseite vorgesehenen Formausnehmungen ist innerhalb des Fahrgastraumes eine größtmögliche Kopffreiheit gewahrt. Durch das die Formausnehmung sowie das Scharnier im Dachbereich abdeckende Aufsatzteil sind Verwirbelungen ausgeschlossen, so daß die aerodynamischen Eigenschaften des Fahrzeuges durch die Klappenanlenkung nicht nachteilig beeinflußt sind. Gleichsam ist ein vom optischen Erscheinungsbild her durch die Anordnung der Scharnierteile unbeeinträchtigtes Fahrzeug zur Verfügung gestellt. Die Formausnehmung zur versenkten Anordnung der Scharnierteile ist in die das Fahrzeugdach eingeformte Regenrinne zu integrieren, womit sich nicht nur bauliche Vorteile ergeben, sondern sich insgesamt auch ein außerordentlich gefälliges äußeres Erscheinungsbild ergibt.

Weitere Ausgestaltungen und Vorteile der Erfindung ergeben sich aus der Zeichnung sowie der nachfolgenden Beschreibung. In der Zeichnung zeigen:

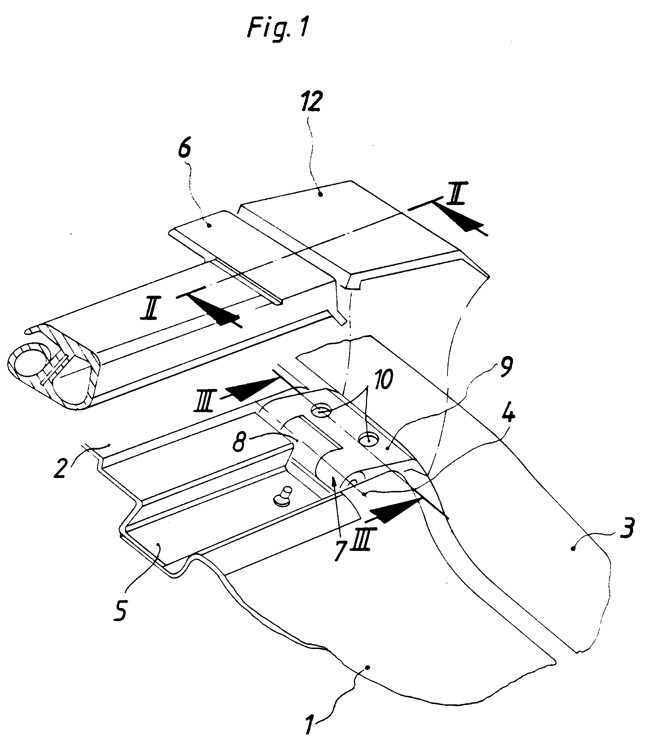

- Fig. 1: eine schematische abgebrochene Darstellung eines Ausführungsbeispiels eines Kraftfahrzeuges nach der Erfindung im rückwärtigen Karosseriedachbereich in perspektivischer Ansicht;
- Fig. 2: eine abgebrochene Schnittdarstellung entsprechend der Schnittlinie II-II in Fig. 1, und
- Fig. 3: eine abgebrochene geschnittene Darstellung gemäß der Linie III-III in Fig. 1.

In der Zeichnung ist allgemein mit 1 die Fahrzeugkarosserie eines im einzelnen nicht dargestellten Kraftfahrzeuges bezeichnet, das als Personenkraftwagen mit einer am Karosseriedach 2 angelenkten Rückwand- bzw. Heckklappe 3 ausgebildet ist. Die in der Zeichnung in der Geschlossenstellung gezeigte Rückwandklappe 3 ist um die Achse 4 schwenkbar.

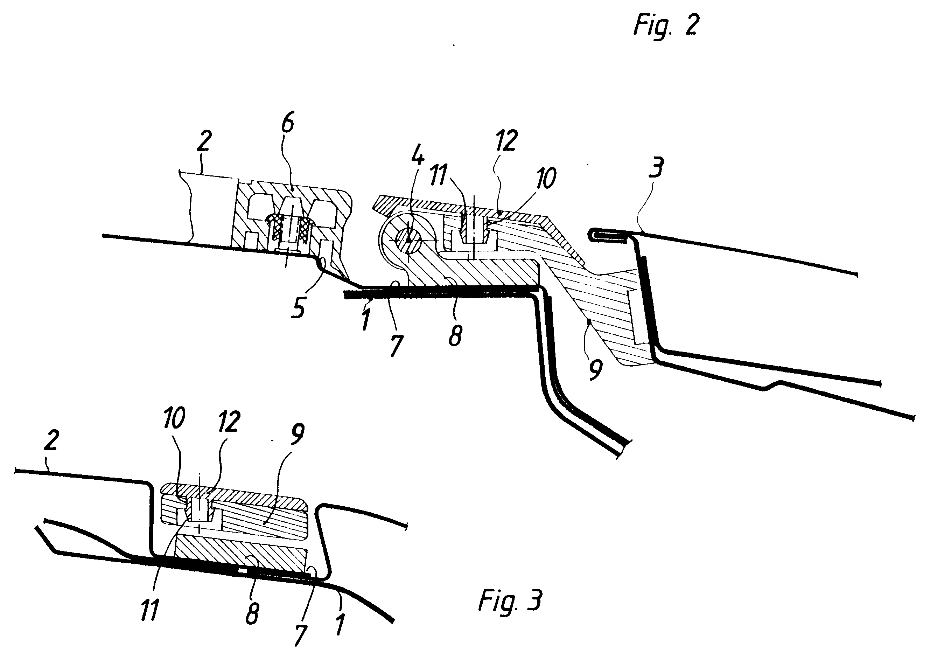

In das Dach 2 der Fahrzeugkarosserie ist eine allgemein mit 5 bezifferte Regenrinne längs der Karosserieaußenseite vorgesehen, in die eine mit 6 bezifferte Abdeck- bzw. Regenleiste einzusetzen ist. Am rückwärtigen Ende ist in das Dach eine Formausnehmung 7 zur versenkten Anordnung der die Rückwandklappe 3 schwenkbeweglich an der Karosserie 1 abstützenden Scharnierteile 8 bzw. 9 eingeformt. Das Scharnierteil 9 ist in seinem in der Geschlossenstellung der Klappe in der Formausnehmung 7 gelegenen Bereich mit Bohrungen 10 versehen, in die Rastansätze 11 eines allgemein mit 12 bezifferten Aufsatzes bzw. Aufsteckteiles einzusetzen sind. Die Formausnehmung 7, die Scharnierteile 8 bzw. 9 sowie die Abdeckung 12 sind insgesamt derart ausgebildet, daß im montierten Zustand der Teile und in der Geschlossenstellung der Rückwandklappe 3 der Aufsatz 12 nach oben hin in etwa bündig mit den angrenzenden Karosseriebereichen abschließen, wie insbesondere Fig. 3 erkennen läßt. Die durch den Aufsatz 12 abgedeckten Formausnehmungen 7 und Scharnierteile 8 bzw. 9 bilden damit mit der Regenrinne 5 und Abdeck- bzw. Regenleiste 6 eine optische und mit der Karosserieoberfläche ebene Einheit.

## Patentansprüche

1. Kraftfahrzeug mit einer an einer Fahrzeugkarosserie (1) über Scharniere (9) schwenkbeweglich abstützbaren Tür oder Klappe (3) sowie mit jeweils einer längs eines Außenseitenbereichs in das Dach (2) der Fahrzeugkarosserie (1) eingeformten, durch ein Leistenprofil abdeckbaren Regenrinne (5), wobei die Fahrzeugkarosserie (1) im Dachbereich (2) an der Außenseite eine Formausnehmung (7) zur versenkten Anordnung zumindest eines Scharnierteils (8,9) umfaßt und die Formausnehmung (7) in die Regenrinne (5) integriert ist und deren rückseitigen Bereich bildet.

2. Kraftfahrzeug nach Anspruch 1, **dadurch gekennzeichnet,** daß die Formausnehmung (7) sowie das versenkt angeordnete Scharnierteil (8,9) mittels eines Aufsatzes (12) abdeckbar sind.

3. Kraftfahrzeug nach Anspruch 1 oder 2, **dadurch gekennzeichnet,** das der Aufsatz (12) an einem Scharnier (9) festlegbar ist.

4. Kraftfahrzeug nach einem der Ansprüche 1 bis 3, **dadurch gekennzeichnet,** daß der Aufsatz (12) als Aufsteckteil ausgebildet ist.

5. Kraftfahrzeug nach einem der Ansprüche 1 bis 4, **dadurch gekennzeichnet,** daß der Aufsatz (12) im montierten Zustand der Teile bündig mit der Außenseite des angrenzenden Dachbereichs (2) der Fahrzeugkarosserie (1) abschließt.

6. Kraftfahrzeug nach einem der Ansprüche 1 bis 5, **dadurch gekennzeichnet,** daß das Leistenprofil (6) und der Absatz (12) im montierten Zustand der Teile nach oben hin bündig aneinander angrenzen.

## Claims

1. A motor vehicle with a door or flap (3) supported on a vehicle body (1) for pivoting movement by means of hinges (9) and with, formed into and along a portion of the outside of the roof (2) of the vehicle body (1) a rain gutter (5) which can be masked by a strip profile, the vehicle body (1) comprising in the roof area (2) on the outside a shaped recess (7) for the flush-fitting disposition of at least one hinge part (8, 9), the shaped recess (7) being integrated into the gutter (5) and forming the rear portion thereof.

2. A motor vehicle according to claim 1, characterised in that the shaped recess (7) and the flush-fitting hinge part (8, 9) can be concealed by a cowling (12).

3. A motor vehicle according to claim 1 or 2, characterised in that the cowling (12) can be fixed on a hinge (9).

4. A motor vehicle according to one of claims 1 to 3, characterised in that the cowling (12) is constructed as a push-on member.

5. A motor vehicle according to one of claims 1 to 4, characterised in that the cowling (12), when the parts are all assembled, is flush with the outside of the adjacent roof area (2) of the vehicle body (1).

6. A motor vehicle according to one of claims 1 to 5, characterised in that when the parts are assembled, the tops of the strip profile (6) and the cowling (12) are flush with each other.

## Revendications

1. Véhicule à moteur avec une porte ou un volet (3) pouvant être monté sur une carrosserie de voiture (1) de façon pivotante au moyen de charnières (9) ainsi qu'avec une gouttière pour la pluie (5) pouvant être recouverte par un bandeau profilé, formée dans le toit (2) de la carrosserie du véhicule (1), la carrosserie du véhicule (1) comprenant dans la zone du toit (2) sur le côté extérieur un évidement (7) servant à disposer de façon enfoncée au moins un élément de charnière (8, 9) et l'évidement (7) étant intégré dans la gouttière pour la pluie (5) et formant sa zone postérieure.

2. Véhicule à moteur selon la revendication 1, caractérisé en ce que l'évidement (7) ainsi que les éléments de charnière (8, 9) disposés de façon enfoncée, peuvent être recouverts au moyen d'un couvercle (12).

3. Véhicule à moteur selon la revendication 1 ou 2, caractérisé en ce que le couvercle (12) peut être fixé sur une charnière (9).

4. Véhicule à moteur selon l'une des revendications 1 à 3, caractérisé en ce que le couvercle (12) est constitué comme une pièce à enficher.

5. Véhicule à moteur selon l'une des revendications 1 à 4, caractérisé en ce que le couvercle (12) quand les pièces sont montées, vient fermer à fleur avec le côté extérieur de la zone adjacente du toit (2) la carrosserie du véhicule (1).

6. Véhicule selon l'une des revendications 1 à 5, caractérisé en ce que le bandeau profilé (6) et le couvercle (12) quand les éléments sont montés, viennent s'ajuster à fleur vers le haut.
